# EUROPEAN PATENT APPLICATION

(11) **EP 4 262 281 A1**
(43) Date of publication of application: **18.10.2023**
(21) Application number: 21914585.1
(22) Date of filing: 30.12.2021
(51) Int. Cl.: H04W 40/00

(54) **ROUTING METHOD AND RELATED DEVICE**

(30) Priority: 31.12.2020 CN 202011640118
(71) Applicant: Huawei Technologies Co., Ltd., Shenzhen, Guangdong 518129 (CN)
(72) Inventor: WANG, Haibo, Shenzhen, Guangdong 518129 (CN); ZHUANG, Shunwan, Shenzhen, Guangdong 518129 (CN); YAN, Gang, Shenzhen, Guangdong 518129 (CN)
(74) Representative: Körber, Martin Hans
(86) International application number: PCT/CN2021/142797
(87) International publication number: WO 2022/143854

(57) **Abstract**

Embodiments of this application disclose a routing method and a related device. When a first network device determines that a preset first condition is met, the first network device sends a request message to a second network device, to request a route reaching at least one another network device. In response to the request message, the second network device sends a route message to the first network device serving as a traffic sender, where the route message carries the route reaching the at least one another network device, and both the first network device and the another network device are directly or indirectly connected to the second network device. In this way, a route is dynamically advertised as required, so that a problem that full route advertisement imposes a relatively high requirement on an access network device can be resolved, and load pressure exerted by a default route or an aggregated route on a core network device can be reduced, thereby implementing flexible route advertisement.

## Description

This application claims priority to Chinese Patent Application No. 202011640118.2, filed with the China National Intellectual Property Administration on December 31, 2020 and entitled "ROUTING METHOD AND RELATED DEVICE", which is incorporated herein by reference in its entirety.

### TECHNICAL FIELD

This application relates to the field of communication technologies, and in particular, to a routing method and a related device.

### BACKGROUND

In a network scenario in which a plurality of first network devices connected to a second network device are deployed, a route of each first network device is diffused to other network devices. That is, each first network device needs to store routes of all the other network devices. In this case, although completion of service distribution can be ensured, a relatively high requirement is imposed on a hardware capacity of the first network device. For example, in a network scenario (such as a large-scale campus) in which a relatively large quantity of access devices connected to a core device are deployed, a low-end access device generally cannot meet such a high storage capability requirement. To lower a requirement on a low-end first network device, a default route or an aggregated route is used currently. That is, the second network device advertises only a default route or an aggregated route that reaches the second network device to each first network device, and the first network device sends all traffic matching the default route or the aggregated route to the second network device, so that the second network device forwards the traffic to another first network device. In this way, each first network device needs to store only the default route or the aggregated route that reaches the second network device, and does not need to store specific routes from the first network device to all the other network devices, thereby greatly lowering a storage capability requirement on the first network device. However, in the default route or the aggregated route, all traffic needs to bypass the second network device, and consequently when there is a relatively large amount of traffic, heavy load pressure is exerted on the second network device.

Based on this, a route advertisement mechanism needs to be provided urgently, so that the first network device can meet a requirement without exerting much load pressure on the second network device.

### SUMMARY

Embodiments of this application provide a routing method and a related device. Therefore, based on a first network device storing a default route or an aggregated route reaching a second network device, the first network device can further request a required route reaching one or more first network devices from the second network device when a preset condition is met, to implement flexible route advertisement. This can enable low-end first network devices to support network deployment, and reduce load pressure exerted by the default route or the aggregated route on the second network device.

According to a first aspect, an embodiment of this application provides a routing method. According to the method, in an initial state, a first network device stores only a default route or an aggregated route reaching a second network device. When the first network device determines that a preset first condition is met, the first network device serving as a traffic sender sends a request message to the second network device, to request a route reaching at least one another network device. In this case, in response to the request message, the second network device may send a route message to the first network device serving as a traffic sender. The route message carries the route reaching the at least one another network device, and both the first network device and the another network device are directly or indirectly connected to the second network device. In this way, a route is dynamically advertised based on the default route or the aggregated route as required, so that a problem that full route advertisement imposes a relatively high requirement on the first network device and another network device at a same position as the first network device can be resolved, and load pressure exerted by a default route or an aggregated route on the second network device can be reduced, thereby implementing flexible route advertisement.

In a possible implementation, the first network device and the second network device are in a pull (English: pull)-mode border gateway protocol (English: Border Gateway Protocol, BGP for short) neighbor relationship, which may also be referred to as a request-mode BGP neighbor relationship or a subscription-mode BGP neighbor relationship. In the pull-mode BGP neighbor relationship, the first network device may be a pull-mode route receiver, the second network device is a pull-mode route sender, the second network device sends a first route reaching the second network device, and the first route indicates the first network device to send traffic destined for the another network device to the second network device. The first network device sends the request message to the second network device based on the first condition, and the second network device sends the route reaching the at least one another network device to the first network device in response to the request message.

In an example, a role of a network device in the pull-mode BGP neighbor relationship may be statically configured by using a command line or the like.

In another example, a role of a network device in the pull-mode BGP neighbor relationship may alternatively be dynamically determined through negotiation. For example, before the pull-mode BGP neighbor relationship is established between the first network device and the second network device, the first network device sends a first negotiation packet including a first role identifier to the second network device. The first negotiation packet indicates a role of the first network device in the pull-mode BGP neighbor relationship to be a first role indicated by the first role identifier. In addition, the second network device sends a second negotiation packet including a second role identifier to the first network device. The second negotiation packet indicates that a role of the second network device in the pull-mode BGP neighbor relationship is a role indicated by the second role identifier. For example, if the first role identifier included in the first negotiation packet indicates the first network device to be a pull-mode route receiver, and the second role identifier included in the second negotiation packet indicates the first network device to be a pull-mode route sender, the first network device determines, based on the first negotiation packet and the second negotiation packet, that in the pull-mode BGP neighbor relationship established between the first network device and the second network device, the role of the first network device is a pull-mode route receiver, and the role of the second network device is a pull-mode route sender. The negotiation packet may be, for example, a BGP OPEN (English: OPEN) packet. The BGP OPEN packet is the first packet that needs to be sent when the BGP neighbor relationship is established, and is used to negotiate whether a capability available to both ends exists between two network devices that are to establish the BGP neighbor relationship.

In a possible implementation, before the first network device sends the request message to the second network device, the first network device stores the first route reaching the second network device, and the first route indicates the first network device to send the traffic destined for the another network device to the second network device. The first route is a default route or an aggregated route. In this implementation, the method provided in this embodiment of this application may further include: The first network device receives a first packet. The first packet is a packet destined for a third network device, and the third network device belongs to the at least one another network device. In this case, the first network device determines that the first packet matches the first route, and sends the first packet to the second network device based on the first route. In this way, before the first condition is met, the first network device can effectively forward the packet from the second network device to another network device.

In a possible implementation, if the route reaching the at least one another network device includes a second route reaching the third network device, after the first network device receives the route message sent by the second network device in response to the request message, the method may further include: The first network device receives a second packet. The second packet is a packet destined for the third network device. After determining that the second packet matches the second route, the first network device may send the second packet to the third network device based on the second route. In this way, the packet sent from the first network device to the third network device does not need to be forwarded by the second network device, and may be directly sent from the first network device to the second network device, thereby saving network resources to some extent.

In a possible implementation, the first condition may include but is not limited to at least one of the following conditions: Condition 1: The first network device determines that a network status of the at least one another network device meets a second condition. Condition 2: There is an optimization requirement on a service type from the first network device to the at least one another network device. Condition 3: The first network device receives an indication message, where the indication message indicates the first network device to request the route reaching the at least one another network device. The second condition in the condition 1 includes but is not limited to at least one of the following conditions: Traffic from the first network device to the at least one another network device is greater than or equal to a first threshold. Alternatively, a delay from the first network device to the at least one another network device is greater than or equal to a second threshold.

In a possible implementation, the request message includes identification information of the at least one another network device, and the identification information may include a prefix of the at least one another network device, or a number of at least one autonomous system (English: Autonomous System, AS for short) through which a path reaching the at least one another network device passes.

The request message sent by the first network device to the second network device may be, for example, an outbound route filtering (English: Outbound Route Filtering, ORF for short) request message. The ORF request message may include a type (English: Type) field, and a value of the type field indicates that the ORF request message includes an embedded ORF field. For example, the embedded ORF field in the ORF request message may include: a type field, an embedded ORF type (English: Embedded ORF Type) field, and an embedded ORF type specific value (English: Embedded ORF Type Specific Value) field. A value of the type field indicates that the ORF request message includes the embedded ORF field. A value of the embedded ORF type field indicates a specific type of the embedded ORF field. For example, the specific type of the embedded ORF field may include an Internet protocol prefix (English: Internet Protocol Prefix, IP-Prefix for short) type, an AS path type, or a covering prefix (English: Covering Prefix, CP for short) ORF type. The embedded ORF type specific value may be determined based on the embedded ORF type field. That is, a format of the embedded ORF type specific value depends on the value of the embedded ORF type field. For example, the embedded ORF type field being 1 indicates that the ORF type is the IP-Prefix type. In this case, the embedded ORF type specific value may include: a 4-octet sequence number (English: Sequence) field, a 1-octet minimum length (English: Minlen) field, a 1-octet maximum length (English: Maxlen) field, a 1-octet length (English: Length) field, and a variable-length prefix (English: Prefix) field.

According to a second aspect, an embodiment of this application provides a routing method. The method is applied to a second network device. For example, the method may include: The second network device receives a request message sent by a first network device. The request message is used to request a route reaching at least one another network device, and both the first network device and the another network device are connected to the second network device. The second network device sends a route message to the first network device in response to the request message. The route message carries the route reaching the at least one another network device. In this way, a route is dynamically advertised based on a default route or an aggregated route as required, so that a problem that full route advertisement imposes a relatively high requirement on the first network device and another network device at a same position as the first network device can be resolved, and load pressure exerted by a default route or an aggregated route on the second network device can be reduced, thereby implementing flexible route advertisement.

In a possible implementation, the first network device and the second network device are in a pull pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device. The first network device sends the request message to the second network device based on a first condition, and the second network device sends the route reaching the at least one another network device to the first network device in response to the request message.

In an example, before the pull-mode BGP neighbor relationship is established between the first network device and the second network device, the method may further include: The second network device sends a negotiation packet including a role identifier to the first network device. The negotiation packet indicates that a role of the second network device in the pull-mode BGP neighbor relationship is a role indicated by the role identifier. A role in the pull-mode BGP neighbor relationship includes: a pull-mode route receiver, a pull-mode route sender, or a pull-mode route sender and route receiver.

In a possible implementation, before the second network device receives the request message sent by the first network device, the method may further include: The second network device sends the first route reaching the second network device to the first network device. The first route indicates the first network device to send traffic destined for the another network device to the second network device. The first route is a default route or an aggregated route.

In a possible implementation, the method may further include: The second network device receives a first packet sent by the first network device. The first packet is a packet destined for a third network device, and the third network device belongs to the at least one another network device. Next, the second network device sends the first packet to the third network device.

The request message includes identification information of the at least one another network device, and the identification information includes a prefix of the at least one another network device, or the request message includes a number of at least one autonomous system AS through which a path reaching the at least one another network device passes.

In a possible implementation, the request message is an outbound route filtering ORF request message, the ORF request message may include a type field, and a value of the type field indicates that a type of the ORF request message is an embedded ORF request message.

In an example, if the ORF request message includes an embedded ORF field, and the embedded ORF field carries the identification information of the at least one another network device, this embodiment of this application may further include: If the second network device determines that a first sequence number Sequence in the embedded ORF field does not match any sequence number in an existing sequence number set on the second network device, the second network device stores a correspondence between the first sequence number and the identification information of the at least one another network device that is carried in the embedded ORF field. For example, that a first sequence number Sequence in the embedded ORF field does not match any sequence number in an existing sequence number set on the second network device means that the first sequence number is different from each sequence number stored on the second network device.

In another example, if the ORF request message includes an embedded ORF field, and the embedded ORF field carries the identification information of the at least one another network device, this embodiment of this application may further include: If the second network device determines that a first sequence number Sequence in the embedded ORF field matches an existing second sequence number on the second network device, the second network device replaces content corresponding to the second sequence number with the identification information of the at least one another network device that is carried in the embedded ORF field. For example, that a first sequence number Sequence in the embedded ORF field matches an existing second sequence number on the second network device means that the first sequence number is the same as the second sequence number stored on the second network device.

In the foregoing two examples, the embedded ORF field is used to request the second network device to incrementally send, to the first network device, a route corresponding to the identification information of the at least one another network device.

In another example, this embodiment of this application may further include: If the second network device determines that a first sequence number Sequence in an embedded ORF field matches an existing second sequence number on the second network device, and the second network device obtains a delete indication based on the embedded ORF field, the second network device deletes content corresponding to the second sequence number. For the delete indication obtained by the second network device based on the embedded ORF field, in one case, the embedded ORF field may not carry identification information of any network device. Therefore, the second network device determines, based on the embedded ORF field, that the content corresponding to the first sequence number (or the second sequence number) needs to be deleted. In another case, the embedded ORF field may include indication information, and the indication information indicates to delete the content corresponding to the first sequence number (or the second sequence number). In this case, the second network device determines, based on the indication information in the embedded ORF field, that the content corresponding to the first sequence number (or the second sequence number) needs to be deleted. The content to be deleted may include the second sequence number and identification information of a corresponding network device that are previously stored on the second network device. For example, that a first sequence number Sequence in the embedded ORF field matches an existing second sequence number on the second network device means that the first sequence number is the same as the second sequence number stored on the second network device.

According to a third aspect, an embodiment of this application further provides a routing apparatus. The apparatus is applied to a first network device, and the apparatus may include a first sending unit and a first receiving unit. The first sending unit is configured to send a request message to a second network device when a first condition is met. The request message is used to request a route reaching at least one another network device, and both the first network device and the another network device are connected to the second network device. The first receiving unit is configured to receive a route message sent by the second network device in response to the request message. The route message carries the route reaching the at least one another network device.

In a possible implementation, the first network device and the second network device are in a pull pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device. The first network device sends the request message to the second network device based on the first condition, and the second network device sends the route reaching the at least one another network device to the first network device in response to the request message.

In an example, the apparatus may further include a second sending unit. The second sending unit is configured to: before the pull-mode BGP neighbor relationship is established between the first network device and the second network device, send a negotiation packet including a role identifier to the second network device. The negotiation packet indicates that a role of the first network device in the pull-mode BGP neighbor relationship is a role indicated by the role identifier. A role in the pull-mode BGP neighbor relationship includes: a pull-mode route receiver, a pull-mode route sender, or a pull-mode route sender and route receiver.

In a possible implementation, before the first network device sends the request message to the second network device, the first network device stores the first route reaching the second network device, and the first route indicates the first network device to send the traffic destined for the another network device to the second network device. The first route is a default route or an aggregated route.

In an example, the apparatus may further include: a second receiving unit, a first determining unit, and a third sending unit. The second receiving unit is configured to receive a first packet. The first packet is a packet destined for a third network device, and the third network device belongs to the at least one another network device. The first determining unit is configured to determine that the first packet matches the first route. The third sending unit is configured to send the first packet to the second network device based on the first route.

In a possible implementation, the route reaching the at least one another network device includes a second route reaching the third network device, and the apparatus may further include: a third receiving unit, a second determining unit, and a fourth sending unit. The third receiving unit is configured to receive a second packet after the route message sent by the second network device in response to the request message is received. The second packet is a packet destined for the third network device. The second determining unit is configured to determine that the second packet matches the second route. The fourth sending unit is configured to send the second packet to the third network device based on the second route.

In a possible implementation, the first condition includes at least one of the following conditions: The first network device determines that a network status of the at least one another network device meets a second condition. There is an optimization requirement on a service type from the first network device to the at least one another network device. The first network device receives an indication message, where the indication message indicates the first network device to request the route reaching the at least one another network device. The second condition includes at least one of the following conditions: Traffic from the first network device to the at least one another network device is greater than or equal to a first threshold. Alternatively, a delay from the first network device to the at least one another network device is greater than or equal to a second threshold.

In a possible implementation, the request message may include identification information of the at least one another network device, and the identification information includes a prefix of the at least one another network device, or a number of at least one autonomous system AS through which a path reaching the at least one another network device passes.

In an example, the request message may be an outbound route filtering ORF request message. The ORF request message may include a type field, and a value of the type field indicates that the ORF request message includes an embedded ORF field.

It should be noted that the routing apparatus provided in the third aspect is configured to perform a related operation mentioned in the first aspect. For a specific implementation and an achieved effect of the routing apparatus, refer to related description of the first aspect. Details are not described herein again.

According to a fourth aspect, an embodiment of this application further provides a routing apparatus. The apparatus is applied to a second network device, and the apparatus may include a first receiving unit and a first sending unit. The first receiving unit is configured to receive a request message sent by a first network device. The request message is used to request a route reaching at least one another network device, and both the first network device and the another network device are connected to the second network device. The first sending unit is configured to send a route message to the first network device in response to the request message. The route message carries the route reaching the at least one another network device.

In a possible implementation, the first network device and the second network device are in a pull pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device. The first network device sends the request message to the second network device based on a first condition, and the second network device sends the route reaching the at least one another network device to the first network device in response to the request message.

In an example, the apparatus may further include a second sending unit. The second sending unit is configured to: before the pull-mode BGP neighbor relationship is established between the second network device and the first network device, send a negotiation packet including a role identifier to the first network device. The negotiation packet indicates that a role of the second network device in the pull-mode BGP neighbor relationship is a role indicated by the role identifier. A role in the pull-mode BGP neighbor relationship includes: a pull-mode route receiver, a pull-mode route sender, or a pull-mode route sender and route receiver.

In a possible implementation, the apparatus may further include a third sending unit. The third sending unit is configured to: before the request message sent by the first network device is received, send the first route reaching the second network device to the first network device. The first route indicates the first network device to send traffic destined for the another network device to the second network device. The first route may be a default route or an aggregated route.

In an example, the apparatus may further include a second receiving unit and a fourth sending unit. The second receiving unit is configured to receive a first packet sent by the first network device. The first packet is a packet destined for a third network device, and the third network device belongs to the at least one another network device. The fourth sending unit is configured to send the first packet to the third network device.

In a possible implementation, the request message includes identification information of the at least one another network device, and the identification information includes a prefix of the at least one another network device, or the request message includes a number of at least one autonomous system AS through which a path reaching the at least one another network device passes.

In an example, the request message may be an outbound route filtering ORF request message. The ORF request message includes a type field, and a value of the type field indicates that a type of the ORF request message is an embedded ORF request message. In one case, if the ORF request message includes an embedded ORF field, the embedded ORF field carries the identification information of the at least one another network device, and the embedded ORF field is used to request the second network device to incrementally send, to the first network device, a route corresponding to the identification information of the at least one another network device, the apparatus may further include a first processing unit. The first processing unit is configured to: if it is determined that a first sequence number Sequence in the embedded ORF field does not match any sequence number in an existing sequence number set on the second network device, store a correspondence between the first sequence number and the identification information of the at least one another network device that is carried in the embedded ORF field. In another case, if the ORF request message includes an embedded ORF field, the embedded ORF field carries the identification information of the at least one another network device, and the embedded ORF field is used to request the second network device to incrementally send, to the first network device, a route corresponding to the identification information of the at least one another network device, the apparatus may further include a second processing unit. The second processing unit is configured to: if it is determined that a first sequence number Sequence in the embedded ORF field matches an existing second sequence number on the second network device, replace content corresponding to the second sequence number with the identification information of the at least one another network device that is carried in the embedded ORF field. In the foregoing cases, the embedded ORF field is used to request the second network device to incrementally send, to the first network device, a route corresponding to the identification information of the at least one another network device. In still another case, the apparatus may further include a third processing unit. The third processing unit is configured to: if it is determined that a first sequence number Sequence in an embedded ORF field matches an existing second sequence number on the second network device, and a delete indication is obtained based on the embedded ORF field, delete content corresponding to the second sequence number. That a first sequence number Sequence in the embedded ORF field matches an existing second sequence number on the second network device may mean that the first sequence number is the same as the second sequence number stored on the second network device, or the like. That a first sequence number Sequence in the embedded ORF field does not match any existing sequence number on the second network device may mean that, for example, the first sequence number is different from each sequence number stored on the second network device.

It should be noted that the routing apparatus provided in the fourth aspect is configured to perform a related operation mentioned in the second aspect. For a specific implementation and an achieved effect of the routing apparatus, refer to related description of the second aspect. Details are not described herein again.

According to a fifth aspect, an embodiment of this application further provides a first network device, including a memory and a processor. The memory is configured to store program code or instructions. The processor is configured to run the program code or the instructions, to enable the first network device to perform the method provided in the first aspect.

According to a sixth aspect, an embodiment of this application further provides a second network device, including a memory and a processor. The memory is configured to store program code or instructions. The processor is configured to run the program code or the instructions, to enable the second network device to perform the method provided in the second aspect.

According to a seventh aspect, an embodiment of this application further provides a computer-readable storage medium. The computer-readable storage medium stores program code or instructions. When the program code or the instructions are run on a computer, the computer is enabled to perform the method provided in any possible implementation provided in the first aspect or the second aspect.

According to an eighth aspect, an embodiment of this application further provides a computer program product. When the computer program product is run on a network device, the network device is enabled to perform the method provided in any possible implementation of the first aspect or the second aspect.

According to a ninth aspect, this application provides a first network device. The first network device includes a control board and an interface board. The control board includes a first processor and a first memory. The interface board includes a second processor, a second memory, and an interface card. The control board and the interface board are coupled.

The first memory may be configured to store program code. The first processor is configured to invoke the program code in the first memory to perform the following operations: determining that a first packet matches a first route, and the like.

The second memory may be configured to store program code. The second processor is configured to invoke the program code in the second memory, to trigger the interface card to perform the following operations: sending a request message to a second network device when a first condition is met, where the request message is used to request a route reaching at least one another network device, and both the first network device and the another network device are connected to the second network device; and receiving a route message sent by the second network device in response to the request message, where the route message carries the route reaching the at least one another network device.

In a possible implementation, an inter-process communication protocol (inter-process communication, IPC) channel is established between the control board and the interface board, and communication is performed between the control board and the interface board through the IPC channel.

According to a tenth aspect, this application provides a second network device. The second network device includes a control board and an interface board. The control board includes a first processor and a first memory. The interface board includes a second processor, a second memory, and an interface card. The control board and the interface board are coupled.

The first memory may be configured to store program code. The first processor is configured to invoke the program code in the first memory to perform the following operations: if it is determined that a first sequence number Sequence in an embedded ORF field does not match any sequence number in an existing sequence number set on the second network device, storing a correspondence between the first sequence number and identification information of at least one another network device that is carried in the embedded ORF field, and the like.

The second memory may be configured to store program code. The second processor is configured to invoke the program code in the second memory, to trigger the interface card to perform the following operations: receiving a request message sent by a first network device, where the request message is used to request a route reaching the at least one another network device, and both the first network device and the another network device are connected to the second network device; and sending a route message to the first network device in response to the request message, where the route message carries the route reaching the at least one another network device.

In a possible implementation, an inter-process communication protocol (inter-process communication, IPC) channel is established between the control board and the interface board, and communication is performed between the control board and the interface board through the IPC channel.

According to an eleventh aspect, this application provides a chip, including a memory and a processor. The memory is configured to store a computer program, and the processor is configured to invoke the computer program from the memory and run the computer program, to perform the method in the first aspect or the second aspect.

Optionally, the chip includes only the processor. The processor is configured to read and execute the computer program stored in the memory. When the computer program is executed, the processor performs the method in the first aspect or the second aspect.

According to a twelfth aspect, an embodiment of this application further provides a network system. The network system may include a first network device and a second network device. The first network device is configured to perform the method in the first aspect, and the second network device is configured to perform the method in the second aspect.

### BRIEF DESCRIPTION OF DRAWINGS

FIG. 1 is a schematic diagram of a structure of a network scenario according to an embodiment of this application;
FIG. 2 is a schematic flowchart of a routing method 100 according to an embodiment of this application;
FIG. 3 is a schematic diagram of a TLV field that is in a negotiation packet and that carries a role identifier according to an embodiment of this application;
FIG. 4 is a schematic diagram of an embedded ORF field according to an embodiment of this application;
FIG. 5 is a schematic diagram of an embedded ORF type specific value according to an embodiment of this application;
FIG. 6 is a schematic diagram of a structure of a routing apparatus 600 according to an embodiment of this application;
FIG. 7 is a schematic diagram of a structure of a routing apparatus 700 according to an embodiment of this application;
FIG. 8 is a schematic diagram of a structure of a network device 800 according to an embodiment of this application;
FIG. 9 is a schematic diagram of a structure of a network device 900 according to an embodiment of this application; and
FIG. 10 is a schematic diagram of a structure of a network system 1000 according to an embodiment of this application.

### DESCRIPTION OF EMBODIMENTS

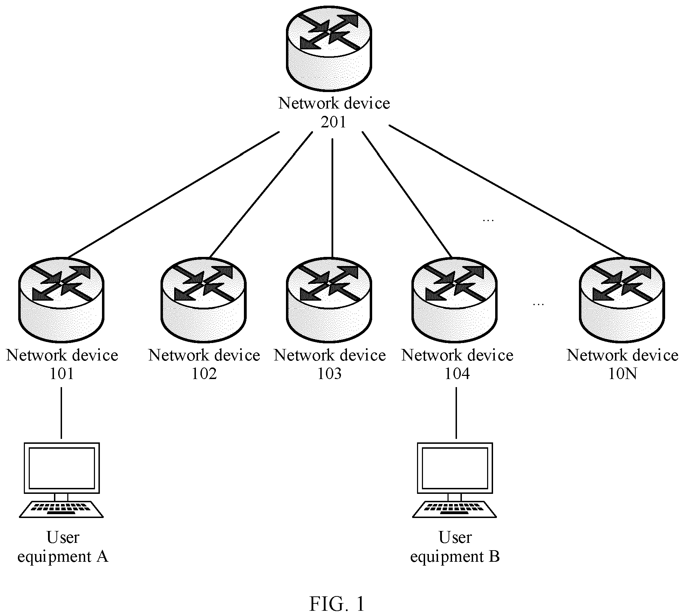

A network scenario shown in FIG. 1 is used as an example to describe a current routing method and a routing method provided in embodiments of this application. As shown in FIG. 1, the network scenario includes a network device 101, a network device 102, ..., a network device 10N, and a network device 201. N is an integer greater than 1. The network device 101, the network device 102, ..., and the network device 10N are connected to the network device 201. That the network device 101, the network device 102, ..., and the network device 10N are connected to the network device 201 may be direct connections, that is, these network devices are directly connected to the network device 201 by using network links, or may be indirect connections, that is, there is an intermediate network device between the network device 201 and these network devices. In an example, the network device 201 may be a core device, the network device 101, the network device 102, ..., and the network device 10N may be a plurality of access devices, and each access device is connected to a user side device. The following description is provided by using an example in which the network device 101 is connected to user equipment A, the network device 104 is connected to user equipment B, and traffic of the user equipment A needs to reach the user equipment B.

Currently, in some possible implementations, to complete service distribution, routes of network devices are fully interconnected, that is, a route of each of the network device 101, the network device 102, ..., and the network device 10N is diffused to other network devices. For example, the network device 101 sends a route 1 of the network device 101 to the network device 201, and the network device 201 sends the route 1 reaching the network device 101 to the network device 102 to the network device 10N. In this way, each network device needs to store routes of other network devices. For example, the network device 101 needs to store all of routes reaching the network device 102 to the network device 10N. As a network scale expands continuously, N increases continuously. Even if each network device generates only one route, each network device needs to store massive routes. However, to reduce networking costs, relatively low-end devices are usually deployed as network devices near the user side, such as the network device 101 to the network device 10N. The low-end devices have a relatively small hardware capacity, and cannot store so many routes in a large-scale network.

In some other implementations, to resolve a problem that the full route advertisement manner has a relatively high requirement on the network device 101 to the network device 10N, a default route or aggregated route manner may be used for route advertisement. That is, the network device 201 advertises only a default route or an aggregated route reaching the network device 201 to each of the network device 101 to the network device 10N, and each of the network device 101 to the network device 10N maintains only the default route or the aggregated route reaching the network device 201. This effectively reduces a quantity of routes that need to be stored on each of the network device 101 to the network device 10N, and lowers storage requirements on these low-end devices. In this implementation, for a packet 1 sent by the user equipment A by using the network device 101 to the user equipment B connected to the network device 104, after receiving the packet 1, the network device 101 may perform matching based on a destination address of the packet 1 to obtain a default route 2 (or an aggregated route 2) reaching the network device 201, and send the packet 1 to the network device 201 based on the default route 2 (or the aggregated route 2). After receiving the packet 1, the network device 201 may perform matching based on the destination address of the packet 1 to obtain a route 3 reaching the network device 104, and send the packet 1 to the network device 104 based on the route 3, so that the network device 104 sends the packet 1 to the user equipment B. It can be learned that, in this implementation, all traffic needs to bypass the network device 201. In this way, when there is a relatively large amount of traffic, heavy load pressure is caused on the network device 201.

The default route (English: Default Route) is a special static route. When a destination address of a packet received by a network device cannot match a route in a routing table, the network device may determine to send the packet based on a default route. That is, the network device sends the packet to a specified location based on the default route. Generally, in a routing table, a route prefix of the default route is 0.0.0.0, and a subnet mask is 0.0.0.0. The aggregated route is an aggregated route obtained by a second network device by aggregating several routes stored on the second network device. A prefix of the aggregated route can cover prefixes of the several routes, so that traffic matching the several routes can also match the aggregated route. In this way, a size of a routing table in each network device can be reduced, memory can be saved, and time required for operations such as analysis and table lookup during packet forwarding can be reduced. When a destination address of a packet received by a first network device matches the aggregated route reaching the second network device in the routing table, the first network device sends the packet to the second network device based on the aggregated route.

Based on this, embodiments of this application provide a routing method. In an initial state, a first network device stores only a default route or an aggregated route reaching a second network device. When the first network device determines that a preset first condition is met, the first network device serving as a traffic sender sends a request message to the second network device, to request a route reaching at least one another network device. In this case, in response to the request message, the second network device may send a route message to the first network device serving as a traffic sender. The route message carries the route reaching the at least one another network device. In this way, a route is dynamically advertised based on the default route or the aggregated route as required, so that a problem that full route advertisement imposes a relatively high requirement on the first network device and another network device at a same position as the first network device can be resolved, and load pressure exerted by a default route or an aggregated route on the second network device can be reduced, thereby implementing flexible route advertisement.

The network scenario shown in FIG. 1 is still used as an example. For example, the method provided in this embodiment of this application may include: In a first phase, the network device 201 advertises a default route 2 (or an aggregated route 2) reaching the network device 201 to each of the network device 101 to the network device 10N. In this phase, for a packet 1 sent by the user equipment A by using the network device 101 to the user equipment B connected to the network device 104, after receiving the packet 1, the network device 101 may perform matching based on a destination address of the packet 1 to obtain the default route 2 (or the aggregated route 2) reaching the network device 201, and send the packet 1 to the network device 201 based on the default route 2 (or the aggregated route 2). After receiving the packet 1, the network device 201 may perform matching based on the destination address of the packet 1 to obtain a route 3 reaching the network device 104, and send the packet 1 to the network device 104 based on the route 3, so that the network device 104 sends the packet 1 to the user equipment B. In a second phase, when determining that traffic sent by the user equipment A by using the network device 101 to the user equipment B connected to the network device 104 meets a preset first condition (for example, the traffic sent by the user equipment A by using the network device 101 to the user equipment B connected to the network device 104 is greater than or equal to a first threshold), the network device 101 sends, to the network device 201, a request message used to request a route 4 reaching the network device 104. After receiving the request message, the network device 201 sends the route 4 reaching the network device 104 to the network device 101 as a response. After the network device 101 receives the route 4 reaching the network device 104, the network device 101 may store the default route 2 (or the aggregated route 2) reaching the network device 201 and the route 4 reaching the network device 104. In this phase, for a packet 2 sent by the user equipment A by using the network device 101 to the user equipment B connected to the network device 104, after receiving the packet 2, the network device 101 may perform matching based on a destination address of the packet 2 to obtain the route 4 reaching the network device 104, and send the packet 2 to the network device 104 based on the route 4, so that the network device 104 sends the packet 1 to the user equipment B. In this way, in this embodiment of this application, a route is dynamically advertised based on the default route or the aggregated route as required, which resolves the problem that full route advertisement imposes a relatively high requirement on each network device, and reduces load pressure exerted by the default route or the aggregated route on the network device 201 when there is a relatively large amount of traffic, thereby implementing flexible route advertisement.

It should be noted that a network architecture to which embodiments of this application are applicable may be referred to as a centralized network architecture. For example, the network architecture may include one central device and a plurality of distributed devices, and the central device establishes a connection to each of the plurality of distributed devices. The central device in the centralized network architecture may also be referred to as a core device of the network.

In the network scenario shown in FIG. 1, for example, the network device 201 may be a controller 201, and the network device 101 to the network device 10N may be forwarding devices 101 to 10N. Each forwarding device establishes a communication connection to the controller 201, and the controller 201 serves as a central device to control or manage each forwarding device. For another example, the network device 201 may be a hub hub 201, and the network device 101 to the network device 10N may be a spine spine 101 to a spine 10N. Each spine establishes a communication connection to the hub 201, and the hub 201 serves as a central device to control and manage each spine or forward a packet of each spine. For another example, the network device 201 may be a spine spine 201, and the network device 101 to the network device 10N may be leaf leaf 101 to a leaf 10N. Each leaf establishes a communication connection to the spine 201, and the spine 201 serves as a central device to control and manage each leaf or forward a packet of each leaf. For another example, the network device 201 may be a virtual extensible local area network (English: Virtual extensible Local Area Network, VXLAN for short) gateway 201, the network device 101 to the network device 10N may be an endpoint device 101 to an endpoint device 10N. Each endpoint device establishes a communication connection to the VXLAN gateway 201, and the VXLAN gateway 201 serves as a central device to forward a packet sent by each endpoint device. For another example, the network device 201 may be a control plane (English: Control Plane, CP for short) device 201, and the network device 101 to the network device 10N may be a user plane (English: User Plane, UP for short) device 101 to a UP device 10N. Each UP device establishes a communication connection to the CP device 201, and the CP device 201 serves as a central device to control and manage each UP device or forward a packet of each UP device.

It should be noted that the network device in embodiments of this application may be any physical device that can implement a packet forwarding function, for example, may be a switch or a router, or may be a board or a chip that has a packet forwarding function in a network device. In addition, the second network device or the network device 201 may be a control management entity, that is, any device or functional entity that can control a network device, for example, may be a network cloud engine (English: Network Cloud Engine, NCE for short), a server, or a router that has a control function, or for another example, may be a functional entity integrated in any network device. The functional entity may be embodied in a hardware form or may be embodied in a software form.

With reference to accompanying drawings, the following describes in detail, by using embodiments, specific implementations of the routing method provided in embodiments of this application.

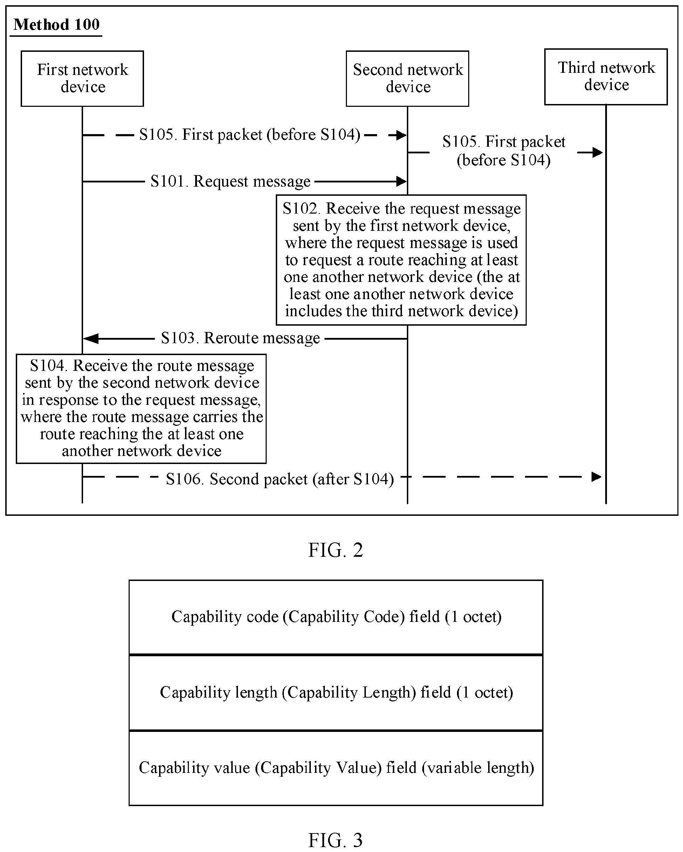

FIG. 2 is a schematic flowchart of a routing method 100 according to an embodiment of this application. Refer to FIG. 2. The method 100 is described in this embodiment of this application by using an interaction process between a first network device and a second network device. The first network device may be applied to, for example, any one of the network device 101 to the network device 10N shown in FIG. 2. In this case, the second network device may be applied to, for example, the network device 201 shown in FIG. 2.

In this embodiment of this application, a plurality of network devices are directly or indirectly connected to the second network device, the plurality of network devices include at least the first network device, and the plurality of network devices may also include a third network device. A border gateway protocol (English: Border Gateway Protocol, BGP for short) neighbor relationship is established between the second network device and the first network device, and the second network device stores routes reaching the plurality of network devices. Between the plurality of network devices, there may be a physical connection, but no BGP neighbor relationship is established, so that direct packet exchange cannot be performed.

During specific implementation, the method 100 may include, for example, the following S101 to S 104.

S101. The first network device sends a request message to the second network device when a first condition is met. The request message is used to request a route reaching at least one another network device.

S 102. The second network device receives the request message sent by the first network device.

In some possible implementations, the first network device and the second network device in a network may be configured in a pull (English: pull)-mode BGP neighbor relationship, which may also be referred to as a request-mode BGP neighbor relationship or a subscription-mode BGP neighbor relationship. Network devices in the pull-mode BGP neighbor relationship may have different roles. The first network device and the second network device in this embodiment of this application are used as examples. The first network device may be a pull-mode route receiver, and the second network device is a pull-mode route sender. In this case, the second network device may send a first route reaching the second network device to the first network device. The first route indicates the first network device to send traffic destined for the another network device to the second network device. The first network device may further send the request message to the second network device based on the first condition, and the second network device sends the route reaching the at least one another network device to the first network device in response to the request message.

In an example, a role of a network device in the pull-mode BGP neighbor relationship may be statically configured by using a command line or the like. For example, a command line 1 is configured on the first network device to specify the first network device as a pull-mode route receiver, and a command line 2 is configured on the second network device to specify the second network device as a pull-mode route sender.

In another example, a role of a network device in the pull-mode BGP neighbor relationship may alternatively be dynamically determined through negotiation. For example, before the pull-mode BGP neighbor relationship is established between the first network device and the second network device, the first network device sends a first negotiation packet including a first role identifier to the second network device. The first negotiation packet indicates a role of the first network device in the pull-mode BGP neighbor relationship to be a first role indicated by the first role identifier. In addition, the second network device sends a second negotiation packet including a second role identifier to the first network device. The second negotiation packet indicates that a role of the second network device in the pull-mode BGP neighbor relationship is a role indicated by the second role identifier. For example, if the first role identifier included in the first negotiation packet indicates the first network device to be a pull-mode route receiver, and the second role identifier included in the second negotiation packet indicates the first network device to be a pull-mode route sender, the first network device determines, based on the first negotiation packet and the second negotiation packet, that in the pull-mode BGP neighbor relationship established between the first network device and the second network device, the role of the first network device is a pull-mode route receiver, and the role of the second network device is a pull-mode route sender.

The negotiation packet may be, for example, a BGP OPEN (English: OPEN) packet. The BGP OPEN packet is the first packet that needs to be sent when the BGP neighbor relationship is established, and is used to negotiate whether a capability available to both ends exists between two network devices that are to establish the BGP neighbor relationship. In this embodiment of this application, a type length value (English: Type Length Value, TLV for short) field extended in the BGP OPEN packet may be used to carry the role identifier of the device. For example, for the TLV field that is in the BGP OPEN packet and that carries the role identifier, refer to FIG. 3. The TLV field may include: a 1-octet capability code (English: Capability Code) field, a 1-octet capability length (English: Capability Length) field, and a variable-length capability value (English: Capability Value) field. A value of the Capability Code field may be any value to be allocated by the International Internet Engineering Task Force (English: The Internet Engineering Task Force, IETF for short), and indicates a type of the TLV field, to indicate that the Capability Value field of the TLV field carries the role identifier of the network device sending the BGP OPEN packet. A value of the Capability Length field indicates a length of the Capability Value field. A value of the Capability Value field indicates the role identifier of the network device sending the BGP OPEN packet. For example, the Capability Value field being 1 indicates that the role of the network device sending the BGP OPEN packet is a pull-mode route sender, the Capability Value field being 2 indicates that the role of the network device sending the BGP OPEN packet is a pull-mode route receiver, and the Capability Value field being 3 indicates that the role of the network device sending the BGP OPEN packet may be a pull-mode route sender, and may also be a pull-mode route receiver. For specific description of the BGP OPEN packet, refer to related description in Request For Comments (English: Request For Comments, RFC for short) 4271.

In the pull-mode BGP neighbor relationship, the route receiver (which may also be referred to as a client Client) refers to a role that stores only a default route or an aggregated route reaching the route sender network device in an initial state, and requests, from the route sender network device when required, a specific route reaching another route receiver network device. The route sender (which may also be referred to as a server Server) refers to a role that stores specific routes to all route receiver network devices, but sends a specific route only after receiving a request message from a route receiver network device. The role of the network device in the pull-mode BGP neighbor relationship may be determined based on a capability of the network device in a specific BGP neighbor relationship. In different BGP neighbor relationships, one network device may have two different roles, or may have a same role. For example, in the pull-mode BGP neighbor relationship between the first network device and the second network device, the first network device may be a pull-mode route receiver, and the second network device may be a pull-mode route sender. However, in a pull-mode BGP neighbor relationship between the second network device and a fourth network device, the second network device may be a pull-mode route receiver, and the fourth network device may be a pull-mode route sender. In this case, a role of the first network device may be a pull-mode route receiver, a role of the second network device may be a pull-mode route receiver, and may also be a pull-mode route sender, and the fourth network device may be a pull-mode route sender.

In some other possible implementations, the first network device and the second network device in a network may alternatively be configured in a regular BGP neighbor relationship, and the following procedure is implemented through configuration on the first network device and the second network device: In an initial state, the second network device may send the first route reaching the second network device. The first route indicates the first network device to send traffic destined for the another network device to the second network device. The first network device may further send the request message to the second network device based on the first condition, and the second network device sends the route reaching the at least one another network device to the first network device in response to the request message. For example, an instruction set 1 is configured on the second network device. The instruction set 1 is used to instruct the second network device to send, in an initial state, only a default route or an aggregated route reaching the second network device to the first network device and another network device at a same position as the first network device, and send a specific route only when receiving a request message from the first network device or the another network device at the same position as the first network device. An instruction set 2 is configured on the first network device and the another network device at the same position as the first network device. The instruction set 2 is used to instruct the first network device or the another network device at the same position as the first network device to store, in an initial state, only the default route or the aggregated route reaching the second network device, and request, from the second network device when required, a specific route reaching at least one another network device. It should be noted that, compared with establishing the pull-mode BGP neighbor relationship, this implementation is complex in configuration, and requires frequent maintenance of the configuration, which is less simple and convenient than the foregoing implementation of establishing the pull-mode BGP neighbor relationship.

During specific implementation, before S101, the second network device sends the first route to the first network device, the first route indicates the first network device to send traffic destined for the another network device to the second network device, and the first network device receives and stores the first route. The first route may be a default route or an aggregated route. The default route is a special static route. When a destination address of a packet received by the first network device cannot match a route in a routing table, the first network device may determine to send the packet based on the default route. That is, the first network device sends the packet to a specified location (that is, the second network device in this embodiment of this application) based on the default route. Generally, in a routing table, a route prefix of the default route is 0.0.0.0, and a subnet mask is 0.0.0.0. The aggregated route is an aggregated route obtained by the second network device by aggregating several routes stored on the second network device. A prefix of the aggregated route can cover prefixes of the several routes, so that traffic matching the several routes can also match the aggregated route. In this way, a size of a routing table in each network device can be reduced, memory can be saved, and time required for operations such as analysis and table lookup during packet forwarding can be reduced. When a destination address of a packet received by the first network device matches the aggregated route reaching the second network device in the routing table, the first network device sends the packet to the second network device based on the aggregated route.

In an example, assuming that the first network device stores the first route, before S104, this embodiment of this application may further include: S105. The first network device sends a first packet to the third network device based on the first route by using the second network device. The third network device is any other network device at a same position as the first network device, for example, the network device 104 shown in FIG. 1. During specific implementation, for example, S105 may include: S1051. The first network device receives the first packet. The first packet is a packet destined for the third network device. S1052. The first network device determines that the first packet matches the first route. S1053. The first network device sends the first packet to the second network device based on the first route. In S 1052, the first network device may determine, from the routing table of the first network device, a routing entry that matches a destination address of the first packet, and determine that the routing entry that matches the destination address of the first packet is the first route. In addition, after S1053, S105 may further include: S1054. The second network device receives the first packet. S1055. The second network device determines a third route based on the destination address of the first packet. A prefix in a routing entry corresponding to the third route matches the destination address of the first packet. S1056. The second network device sends the first packet to the third network device based on the third route.

After the first network device stores the first route, whether the preset first condition is met may be further detected, to trigger the first network device to request, from the second network device, a specific route reaching at least one another network device. The first condition may be a trigger condition that is preconfigured on the first network device and that is used to request a specific route. Only one first condition may be configured on the first network device, and the first condition is applicable to triggering a specific route reaching any one of all other network devices to be requested. Alternatively, a plurality of first conditions may be configured on the first network device, and each first condition is applicable to triggering a specific route reaching a corresponding part of network devices to be requested. For example, on the network device 101 shown in FIG. 1, (N-1) first conditions are configured, and each first condition corresponds to one network device. For example, a first condition 1 is used to trigger a specific route reaching the network device 102 to be requested, and a first condition 2 is used to trigger a specific route reaching the network device 104 to be requested.

The first condition may include at least one of the following conditions: The first network device determines that a network status of the at least one another network device meets a second condition. There is an optimization requirement on a service type from the first network device to the at least one another network device. The first network device receives an indication message, where the indication message indicates the first network device to request the route reaching the at least one another network device.

In an example, the first network device may include a traffic statistics collection module, a policy processing module, and a BGP module. The traffic statistics collection module is configured to collect statistics on traffic received and sent by the first network device. The policy processing module is configured to determine, based on a statistics collection result of the traffic statistics collection module and the preset second condition, whether S101 needs to be performed, and if necessary, send identification information of at least one another to-be-requested network device to the BGP module. The BGP module is configured to generate the request message in S 101. The identification information of the at least one network device may be, for example, a prefix of the at least one another network device, or may be a number of at least one autonomous system (English: Autonomous System, AS for short) through which a path reaching the at least one another network device passes. The second condition may include, for example, at least one of the following conditions: Traffic from the first network device to the at least one another network device is greater than or equal to a first threshold (for example, 500 gigabytes (GB)). Alternatively, a delay from the first network device to the at least one another network device is greater than or equal to a second threshold (for example, 30 milliseconds (ms)). It should be noted that, the second condition may be flexibly configured based on an actual requirement.

In another example, the first network device may include the BGP module, while the traffic statistics collection module and the policy processing module are integrated into another device. The another device is configured to perform traffic monitoring and policy processing on the first network device. When determining that traffic received and sent by the first network device meets a preset third condition, the another device generates an indication message and sends the indication message to the first network device. The BGP module of the first network device generates the request message in S 101 based on the indication message. The traffic monitoring module and the policy processing module in this example may be integrated into one another device, or may be integrated into different devices. It should be noted that the third condition may be flexibly configured based on an actual requirement. The third condition may be the same as or different from the second condition.

In still another example, the first network device may alternatively trigger S 101 when there is an optimization requirement on a service type from the first network device to the at least one another network device. For example, there is an important online conference from the first network device to the third network device. To ensure quality of the online conference, an audio service needs to be optimized. In this case, it may be determined that the first condition is met, and S101 is performed to request a specific route reaching the third network device.

The request message in S 101 may carry identification information of the at least one another requested network device. The identification information includes a prefix of the at least one another network device, or a number of at least one autonomous system AS through which a path reaching the at least one another network device passes. If the request message is used to request the route reaching the third network device, the identification information carried in the request message may be a prefix of the third network device. If the request message is used to request a route reaching a plurality of other network devices, the identification information carried in the request message may be a number of at least one AS through which the path reaching the plurality of other network devices passes, for example, may be numbers of all or some ASs in an AS path.

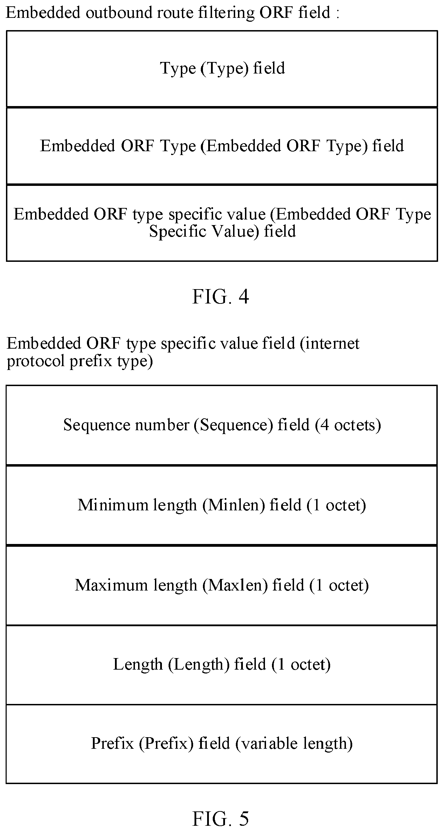

In an example, the request message may be an outbound route filtering (English: Outbound Route Filtering, ORF for short) request message. The ORF request message may include a type field, and a value of the type field indicates that a type of the ORF request message is an embedded ORF request message. The embedded ORF request message may further include an embedded ORF field. The embedded ORF field is used to carry the identification information of the at least one another network device. The embedded ORF field is used to request the second network device to incrementally send, to the first network device, a route corresponding to the identification information of the at least one another network device. For example, the embedded ORF field in the ORF request message is shown in FIG. 4, and may include: a type (English: Type) field, an embedded ORF type (English: Embedded ORF Type) field, and an embedded ORF type specific value (English: Embedded ORF Type Specific Value) field. A value of the type field indicates that the ORF request message includes the embedded ORF field. A value of the embedded ORF type field indicates a specific type of the embedded ORF field. For example, the specific type of the embedded ORF field may include an Internet protocol prefix (English: Internet Protocol Prefix, IP-Prefix for short) type, an AS path type, or a covering prefix (English: Covering Prefix, CP for short) ORF type. The embedded ORF type specific value may be determined based on the embedded ORF type field. That is, a format of the embedded ORF type specific value depends on the value of the embedded ORF type field. For example, the embedded ORF type field being 1 indicates that the ORF type is the IP-Prefix type. In this case, the embedded ORF type specific value may be shown in FIG. 5, and includes: a 4-octet sequence number (English: Sequence) field, a 1-octet minimum length (English: Minlen) field, a 1-octet maximum length (English: Maxlen) field, a 1-octet length (English: Length) field, and a variable-length prefix (English: Prefix) field. Routes stored on the second network device are sorted based on Sequence values. Therefore, a value of the Sequence field in the request message is used to retrieve a routing entry on the second network device; a value of the Minlen field indicates a bit (English: bit) included in a shortest prefix; a value of the Maxlen field indicates a bit included in a longest prefix; a value of the Length field indicates a length of a prefix; and a value of the Prefix field is a prefix address of a network device whose route is requested, for example, the prefix of the third network device.

It should be noted that the second network device stores a correspondence between a sequence number and identification information, to record route advertisement of the second network device. For example, the correspondence stored on the second network device between a sequence number and identification information is shown in the following Table 1:

**Table 1 Correspondence between a sequence number and identification information**

| Sequence number | Identification information |
|---|---|
| 2 | Fourth network device |
| 3 | Fifth network device |
| 4 | Sixth network device |
| 8 | Seventh network device |

In an example, when the second network device determines that the value of the sequence number field in the embedded ORF field does not match an existing sequence number on the second network device, the second network device stores a correspondence between the value of the sequence number field in the embedded ORF field and the identification information of the at least one another network device that is carried in the embedded ORF field. For example, if the sequence number field in the embedded ORF field in the request message is 1, and the identification information is the prefix of the third network device, after the second network device receives the request message, the stored correspondence between a sequence number and identification information may be shown in the following Table 2:

**Table 2 Correspondence between a sequence number and identification information**

| Sequence number | Identification information |
|---|---|
| 1 | Third network device |
| 2 | Fourth network device |
| 3 | Fifth network device |
| 4 | Sixth network device |
| 8 | Seventh network device |

In another example, when the second network device determines that the value of the sequence number field in the embedded ORF field matches an existing sequence number on the second network device, and the embedded ORF field carries the identification information of the at least one another network device, the second network device replaces content corresponding to the matched existing sequence number with the identification information of the at least one another network device that is carried in the embedded ORF field. For example, if the sequence number field in the embedded ORF field in the request message is 3, and the identification information is the prefix of the third network device, after the second network device receives the request message based on Table 1, the stored correspondence between a sequence number and identification information may be shown in the following Table 3:

**Table 3 Correspondence between a sequence number and identification information**

| Sequence number | Identification information |
|---|---|
| 2 | Fourth network device |
| 3 | Third network device |
| 4 | Sixth network device |
| 8 | Seventh network device |

In still another example, when the second network device determines that the value of the sequence number field in the embedded ORF field matches an existing sequence number on the second network device, but a delete instruction is determined based on the embedded ORF field, the second network device deletes content corresponding to the matched existing sequence number. In one case, that a delete indication is determined based on the embedded ORF field may mean that the embedded ORF field includes indication information, and the indication information indicates to delete content corresponding to the sequence number in the embedded ORF field. Alternatively, in another case, that a delete indication is determined based on the embedded ORF field may mean that the embedded ORF field does not carry any identification information (that is, the Embedded ORF Type Specific Value field is empty or has a value of 0). For example, if the sequence number field in the embedded ORF field in the request message is 2, and does not carry any identification information, after the second network device receives the request message based on Table 1, the stored correspondence between a sequence number and identification information may be shown in the following Table 4:

**Table 4 Correspondence between a sequence number and identification information**

| Sequence number | Identification information |
|---|---|
| 3 | Fifth network device |
| 4 | Sixth network device |
| 8 | Seventh network device |

Compared with an existing type in the ORF request message, the extended embedded ORF type field in the ORF request message makes it unnecessary to fully update all routes when a route is requested, and only targeted processing is performed for the requested route, thereby effectively reducing network resource overheads in a route request process, and improving route advertisement efficiency.

After receiving the request message sent by the first network device, the second network device may determine, by parsing the request message, that the first network device needs to request the route reaching the at least one another network device, which provides a data basis for the second network device to subsequently send the route required by the first network device.

S103. The second network device sends a route message to the first network device in response to the request message. The route message carries the route reaching the at least one another network device.

S104. The first network device receives the route message sent by the second network device in response to the request message.

In an example, if the first network device requests, from the second network device, a second route reaching the third network device, the route message generated by the second network device may carry the second route reaching the third network device, and the route message is sent to the first network device.

In this example, the first network device obtains and stores the second route based on the route message. For example, the first network device replaces, with the second route, a first route in a routing entry whose prefix matches an address of the third network device. After S104, this embodiment of this application may further include: S106. The first network device sends a second packet to the third network device based on the second route. During specific implementation, for example, S106 may include: S1061. The first network device receives the second packet. The second packet is a packet destined for the third network device. S1062. The first network device determines that the second packet matches the second route. S1063. The first network device sends the second packet to the third network device based on the second route. In S1062, the first network device may determine, from the routing table of the first network device, a routing entry that matches a destination address of the second packet, and determine that the routing entry that matches the destination address of the second packet is the second route.

In another example, if the first network device requests, from the second network device, a third route reaching an AS 100, the route message generated by the second network device may carry the third route reaching the AS 100, and the route message is sent to the first network device.

In this example, the first network device obtains and stores the third route based on the route message. For example, the first network device replaces, with the third route, a first route in a routing entry whose prefix matches an address of a network device in the AS 100. After S104, this embodiment of this application may further include: S107. The first network device sends a third packet to the AS 100 based on the third route. During specific implementation, for example, S107 may include: S1071. The first network device receives the third packet. The third packet is a packet destined for the AS 100. S1072. The first network device determines that the third packet matches the third route. S1073. The first network device sends the third packet to the AS 100 based on the third route. In addition, after the third packet arrives at the AS 100, an edge device receiving the third packet may send, based on a destination address of the third packet, the third packet to a destination device of the third packet in the AS 100.

It can be learned that, according to the method provided in this embodiment of this application, in an initial state, the first network device stores only the default route or the aggregated route reaching the second network device. When the first network device determines that the preset first condition is met, the first network device serving as a traffic sender sends the request message to the second network device, to request the route reaching the at least one another network device. In this case, in response to the request message, the second network device may send the route message to the first network device serving as a traffic sender. The route message carries the route reaching the at least one another network device. In this way, a route is dynamically advertised based on the default route or the aggregated route as required, so that a problem that full route advertisement imposes a relatively high requirement on the first network device and another network device at a same position as the first network device can be resolved, and load pressure exerted by the default route or the aggregated route on the second network device can be reduced, thereby implementing flexible route advertisement.

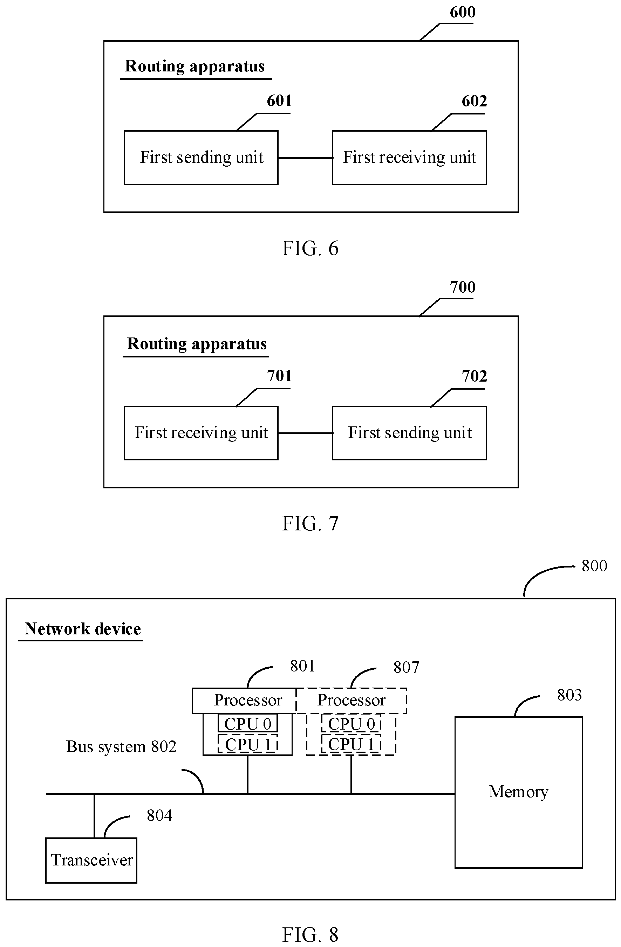

Correspondingly, an embodiment of this application further provides a routing apparatus 600. The apparatus 600 has any function of the network device 101 in the example shown in FIG. 1 or the first network device in the method 100 shown in FIG. 2. As shown in FIG. 6, the apparatus 600, applied to a first network device, may include a first sending unit 601 and a first receiving unit 602.

The first sending unit 601 is configured to send a request message to a second network device when a first condition is met. The request message is used to request a route reaching at least one another network device, and both the first network device and the another network device are connected to the second network device. The first sending unit 601 may perform S101 shown in FIG. 2.

The first receiving unit 602 is configured to receive a route message sent by the second network device in response to the request message. The route message carries the route reaching the at least one another network device. The first receiving unit 602 may perform S104 shown in FIG. 2.

In a possible implementation, the first network device and the second network device are in a pull pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device. The first network device sends the request message to the second network device based on the first condition, and the second network device sends the route reaching the at least one another network device to the first network device in response to the request message.

In an example, the apparatus 600 may further include a second sending unit. The second sending unit is configured to: before the pull-mode BGP neighbor relationship is established between the first network device and the second network device, send a negotiation packet including a role identifier to the second network device. The negotiation packet indicates that a role of the first network device in the pull-mode BGP neighbor relationship is a role indicated by the role identifier. A role in the pull-mode BGP neighbor relationship includes: a pull-mode route receiver, a pull-mode route sender, or a pull-mode route sender and route receiver.

In a possible implementation, before the first network device sends the request message to the second network device, the first network device stores the first route reaching the second network device, and the first route indicates the first network device to send the traffic destined for the another network device to the second network device. The first route is a default route or an aggregated route.

In an example, the apparatus 600 may further include: a second receiving unit, a first determining unit, and a third sending unit. The second receiving unit is configured to receive a first packet. The first packet is a packet destined for a third network device, and the third network device belongs to the at least one another network device. The first determining unit is configured to determine that the first packet matches the first route. The third sending unit is configured to send the first packet to the second network device based on the first route. For related description of the example, refer to S 105 shown in FIG. 2.

In a possible implementation, the route reaching the at least one another network device includes a second route reaching the third network device, and the apparatus 600 may further include: a third receiving unit, a second determining unit, and a fourth sending unit. The third receiving unit is configured to receive a second packet after the route message sent by the second network device in response to the request message is received. The second packet is a packet destined for the third network device. The second determining unit is configured to determine that the second packet matches the second route. The fourth sending unit is configured to send the second packet to the third network device based on the second route. For related description of the implementation, refer to S 106 shown in FIG. 2.

In a possible implementation, the first condition includes at least one of the following conditions: The first network device determines that a network status of the at least one another network device meets a second condition. There is an optimization requirement on a service type from the first network device to the at least one another network device. The first network device receives an indication message, where the indication message indicates the first network device to request the route reaching the at least one another network device. The second condition includes at least one of the following conditions: Traffic from the first network device to the at least one another network device is greater than or equal to a first threshold. Alternatively, a delay from the first network device to the at least one another network device is greater than or equal to a second threshold.

In a possible implementation, the request message may include identification information of the at least one another network device, and the identification information includes a prefix of the at least one another network device, or a number of at least one autonomous system AS through which a path reaching the at least one another network device passes.

In an example, the request message may be an outbound route filtering ORF request message. The ORF request message may include a type field, and a value of the type field indicates that the ORF request message includes an embedded ORF field.

It should be noted that the foregoing units having a same function but different sequence numbers in names may be one unit that can implement the function. For example, the first sending unit 601 and the second sending unit may be a same unit having a sending function.

It should be noted that the routing apparatus 600 shown in FIG. 6 may be the network device 101 in the embodiment shown in FIG. 1 or the first network device in the example shown in FIG. 2. Therefore, for various specific embodiments of the routing apparatus 600, refer to related description of the method 100 corresponding to FIG. 2. Details are not described in this embodiment again.

An embodiment of this application further provides a routing apparatus 700. The apparatus 700 has any function of the network device 201 in the example shown in FIG. 1 or the second network device in the method 100 shown in FIG. 2. As shown in FIG. 7, the apparatus 700, applied to a second network device, may include a first receiving unit 701 and a first sending unit 702.

The first receiving unit 701 is configured to receive a request message sent by a first network device. The request message is used to request a route reaching at least one another network device, and both the first network device and the another network device are connected to the second network device. The first receiving unit 701 may perform S 102 shown in FIG. 2.

The first sending unit 702 is configured to send a route message to the first network device in response to the request message. The route message carries the route reaching the at least one another network device. The first sending unit 702 may perform S103 shown in FIG. 2.

In a possible implementation, the first network device and the second network device are in a pull pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device. The first network device sends the request message to the second network device based on a first condition, and the second network device sends the route reaching the at least one another network device to the first network device in response to the request message.

In an example, the apparatus 700 may further include a second sending unit. The second sending unit is configured to: before the pull-mode BGP neighbor relationship is established between the second network device and the first network device, send a negotiation packet including a role identifier to the first network device. The negotiation packet indicates that a role of the second network device in the pull-mode BGP neighbor relationship is a role indicated by the role identifier. A role in the pull-mode BGP neighbor relationship includes: a pull-mode route receiver, a pull-mode route sender, or a pull-mode route sender and route receiver.

In a possible implementation, the apparatus 700 may further include a third sending unit. The third sending unit is configured to: before the request message sent by the first network device is received, send the first route reaching the second network device to the first network device. The first route indicates the first network device to send traffic destined for the another network device to the second network device. The first route may be a default route or an aggregated route.

In an example, the apparatus 700 may further include a second receiving unit and a fourth sending unit. The second receiving unit is configured to receive a first packet sent by the first network device. The first packet is a packet destined for a third network device, and the third network device belongs to the at least one another network device. The fourth sending unit is configured to send the first packet to the third network device. For related description of the example, refer to S105 in the embodiment shown in FIG. 2.

In a possible implementation, the request message includes identification information of the at least one another network device, and the identification information includes a prefix of the at least one another network device, or the request message includes a number of at least one autonomous system AS through which a path reaching the at least one another network device passes.

In an example, the request message may be an outbound route filtering ORF request message. The ORF request message includes a type field, and a value of the type field indicates that a type of the ORF request message is an embedded ORF request message. In one case, if the ORF request message includes an embedded ORF field, the embedded ORF field carries the identification information of the at least one another network device, and the embedded ORF field is used to request the second network device to incrementally send, to the first network device, a route corresponding to the identification information of the at least one another network device, the apparatus may further include a first processing unit. The first processing unit is configured to: if it is determined that a first sequence number Sequence in the embedded ORF field does not match any sequence number in an existing sequence number set on the second network device, store a correspondence between the first sequence number and the identification information of the at least one another network device that is carried in the embedded ORF field. In another case, if the ORF request message includes an embedded ORF field, the embedded ORF field carries the identification information of the at least one another network device, and the embedded ORF field is used to request the second network device to incrementally send, to the first network device, a route corresponding to the identification information of the at least one another network device, the apparatus may further include a second processing unit. The second processing unit is configured to: if it is determined that a first sequence number Sequence in the embedded ORF field matches an existing second sequence number on the second network device, replace content corresponding to the second sequence number with the identification information of the at least one another network device that is carried in the embedded ORF field. In still another case, the apparatus may further include a third processing unit. The third processing unit is configured to: if it is determined that a first sequence number Sequence in an embedded ORF field matches an existing second sequence number on the second network device, and a delete indication is obtained based on the embedded ORF field, delete content corresponding to the second sequence number. In the foregoing cases, matching may mean "the same" or the like, and not matching may mean "different" or the like.

It should be noted that the foregoing units having a same function but different sequence numbers in names may be one unit that can implement the function. For example, the first receiving unit 701 and the second receiving unit may be a same unit having a receiving function.

It should be noted that the routing apparatus 700 shown in FIG. 7 may be the network device 201 in the embodiment shown in FIG. 1 or the second network device in the example shown in FIG. 2. Therefore, for various specific embodiments of the routing apparatus 700, refer to related description of the method 100 corresponding to FIG. 2. Details are not described in this embodiment again.

Refer to FIG. 8. An embodiment of this application provides a network device 800. The network device 800 may be the network device in any one of the foregoing embodiments. For example, the network device may be the network device 101 in FIG. 1 or the first network device in FIG. 2. In this case, the network device 800 may implement a function of the first network device in the method 100. For another example, the network device may be the network device 201 in FIG. 1 or the second network device in FIG. 2. In this case, the network device 800 may implement a function of the second network device in the method 100. The network device 800 includes at least one processor 801, a bus system 802, a memory 803, and at least one transceiver 804.

The network device 800 is an apparatus of a hardware structure, and may be configured to implement functional modules in the routing apparatus 600 shown in FIG. 6, or may be configured to implement functional modules in the routing apparatus 700 shown in FIG. 7. For example, a person skilled in the art may figure out that the first determining unit and the second determining unit in the routing apparatus 600 shown in FIG. 6 may be implemented by the at least one processor 801 by invoking code in the memory 803, and the first sending unit 601 and the first receiving unit 602 in the routing apparatus 600 shown in FIG. 6 may be implemented by the transceiver 804.

Optionally, the network device 800 may be further configured to implement a function of the network device in any one of the foregoing embodiments.

Optionally, the processor 801 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions in this application.

The bus system 802 may include a path to transmit information between the foregoing components.

The transceiver 804 is configured to communicate with another device or a communication network.

The memory 803 may be, but is not limited to, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be used to carry or store expected program code in an instruction or data structure form and that can be accessed by a computer. The memory may exist independently, and is connected to the processor by using the bus. Alternatively, the memory may be integrated with the processor.

The memory 803 is configured to store application program code for executing solutions of this application, and the processor 801 controls execution. The processor 801 is configured to execute the application code stored in the memory 803, to implement a function in the method in this patent.

During specific implementation, in an embodiment, the processor 801 may include one or more CPUs, for example, a CPU 0 and a CPU 1 shown in FIG. 8.

During specific implementation, in an embodiment, the network device 800 may include a plurality of processors, for example, the processor 801 and a processor 807 shown in FIG. 8. Each of the processors may be a single-core (single-CPU) processor, or may be a multicore (multi-CPU) processor. The processor herein may be one or more devices, circuits, and/or processing cores configured to process data (for example, computer program instructions).

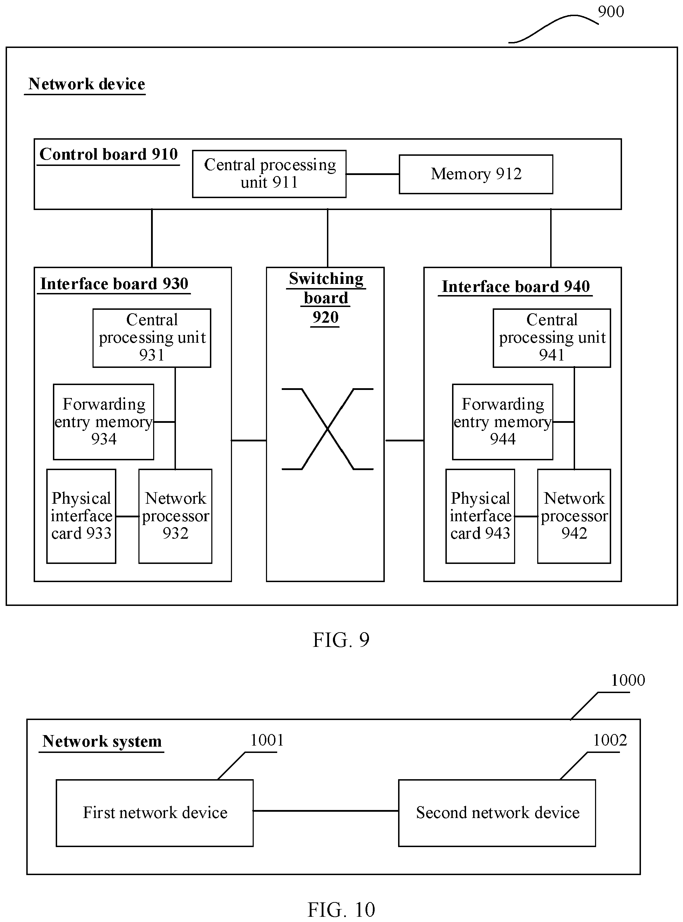

FIG. 9 is a schematic diagram of a structure of another network device 900 according to an embodiment of this application. For example, the network device 900 may be the network device 101 in FIG. 1 or the first network device in FIG. 2. In this case, the network device 900 may implement a function of the first network device in the method 100. For another example, the network device 900 may be the network device 201 in FIG. 1 or the second network device in FIG. 2. In this case, the network device 900 may implement a function of the second network device in the method 100.

The network device 900 includes a control board 910 and an interface board 930.

The control board 910 is also referred to as a main processing unit (main processing unit, MPU) or a route processor card (route processor card). The control board 910 controls and manages components in the network device 900, including functions of route calculation, device management, device maintenance, and protocol processing. The control board 910 includes a central processing unit 911 and a memory 912.

The interface board 930 is also referred to as a line processing unit (line processing unit, LPU), a line card (line card), or a service board. The interface board 930 is configured to provide various service interfaces and forward a data packet. The service interface includes but is not limited to an Ethernet interface, a POS (Packet over SONET/SDH) interface, and the like. The Ethernet interface is, for example, a flexible Ethernet client (Flexible Ethernet Client, FlexE Client). The interface board 930 includes a central processing unit 931, a network processor 932, a forwarding entry memory 934, and a physical interface card (physical interface card, PIC) 933.

The central processing unit 931 on the interface board 930 is configured to control and manage the interface board 930, and communicate with the central processing unit 911 on the control board 910.

The network processor 932 is configured to forward a packet. A form of the network processor 932 may be a forwarding chip. Specifically, processing of an uplink packet includes processing of an inbound interface of the packet and forwarding table lookup, and processing of a downlink packet includes forwarding table lookup and the like.

The physical interface card 933 is configured to implement a physical layer connection function, from which original traffic enters the interface board 930, and a processed packet is sent from the physical interface card 933. The physical interface card 933 includes at least one physical interface. The physical interface is also referred to as a physical port. The physical interface card 933 corresponds to a FlexE physical interface in the system architecture. The physical interface card 933 is also referred to as a subcard, which may be installed on the interface board 930, and is responsible for converting an optical/electrical signal into a packet, performing validity check on the packet, and then forwarding the packet to the network processor 932 for processing. In some embodiments, the central processing unit 931 of the interface board 930 may also perform a function of the network processor 932, for example, implement software forwarding based on a general-purpose CPU. Therefore, the network processor 932 is not required in the physical interface card 933.

Optionally, the network device 900 includes a plurality of interface boards. For example, the network device 900 further includes an interface board 940. The interface board 940 includes a central processing unit 941, a network processor 942, a forwarding entry memory 944, and a physical interface card 943.

Optionally, the network device 900 further includes a switching board 920. The switching board 920 may also be referred to as a switch fabric unit (switch fabric unit, SFU). When the network device has a plurality of interface boards 930, the switching board 920 is configured to complete data exchange between the interface boards. For example, the interface board 930 and the interface board 940 may communicate with each other by using the switching board 920.

The control board 910 and the interface board 930 are coupled. For example, the control board 910, the interface board 930, the interface board 940, and the switching board 920 are connected to a platform backboard by using a system bus for interworking. In a possible implementation, an inter-process communication protocol (inter-process communication, IPC) channel is established between the control board 910 and the interface board 930, and communication is performed between the control board 910 and the interface board 930 through the IPC channel.

Logically, the network device 900 includes a control plane and a forwarding plane. The control plane includes the control board 910 and the central processing unit 931. The forwarding plane includes components that perform forwarding, such as the forwarding entry memory 934, the physical interface card 933, and the network processor 932. The control plane performs functions such as routing, generating a forwarding table, processing signaling and protocol packets, and configuring and maintaining a device status. The control plane delivers the generated forwarding table to the forwarding plane. On the forwarding plane, the network processor 932 performs, based on the forwarding table delivered by the control plane, table lookup and forwarding on a packet received by the physical interface card 933. The forwarding table delivered by the control plane may be stored in the forwarding entry memory 934. In some embodiments, the control plane and the forwarding plane may be completely separate on different devices.

If the network device 900 is configured as a first network device, the network processor 932 may trigger the physical interface card 933 to: send a request message to a second network device when a first condition is met, where the request message is used to request a route reaching at least one another network device, and both the first network device and the another network device are connected to the second network device; and receive a route message sent by the second network device in response to the request message, where the route message carries the route reaching the at least one another network device. The central processing unit 911 may determine that a first packet matches a first route, and determine that a second packet matches a second route.

If the network device 900 is configured as a second network device, the network processor 932 may trigger the physical interface card 933 to: receive a request message sent by a first network device, where the request message is used to request a route reaching at least one another network device, and both the first network device and the another network device are connected to the second network device; and send a route message to the first network device in response to the request message, where the route message carries the route reaching the at least one another network device. If it is determined that a first sequence number Sequence in an embedded ORF field matches an existing second sequence number on the second network device, and a delete indication is obtained based on the embedded ORF field, the central processing unit 911 may delete content corresponding to the second sequence number.

It should be understood that the first sending unit 601 and the first receiving unit 602 in the routing apparatus 600, the first receiving unit 701 and the first sending unit 702 in the routing apparatus 700, and the transceiver 804 in the network device 800 may be equivalent to the physical interface card 933 or the physical interface card 943 in the network device 900. The first determining unit and the second determining unit in the routing apparatus 600, the first processing unit, the second processing unit, and the third processing unit in the routing apparatus 700, and the processor 801 in the network device 800 may be equivalent to the central processing unit 911 or the central processing unit 931 in the network device 900.

It should be understood that an operation on the interface board 940 is consistent with an operation on the interface board 930 in this embodiment of this application. For brevity, details are not described. It should be understood that the network device 900 in this embodiment may correspond to the apparatus or the network device that establishes a BGP neighbor relationship in the foregoing method embodiments. The control board 910, the interface board 930, and/or the interface board 940 in the network device 900 may implement functions and/or various steps implemented by the routing apparatus 600, the routing apparatus 700, or the network device 800 in the foregoing method embodiments. For brevity, details are not described herein again.

It should be understood that, there may be one or more control boards. When there are a plurality of control boards, the control boards may include an active control board and a standby control board. It should be noted that there may be one or more interface boards, and the network device with a stronger data processing capability provides more interface boards. There may be one or more physical interface cards on the interface board. There may be no switching board, or there may be one or more switching boards. When there are a plurality of switching boards, load sharing and redundancy backup may be jointly implemented by the plurality of switching boards. In a centralized forwarding architecture, the network device may not need the switching board, and the interface board is responsible for a service data processing function of the entire system. In a distributed forwarding architecture, the network device may include at least one switching board, and data is exchanged between a plurality of interface boards by using the switching board, to provide a large-capacity data exchange and processing capability. Therefore, a data access and processing capability of the network device in the distributed architecture is stronger than that in the centralized architecture. Optionally, in another form of the network device, there may be only one board. That is, there is no switching board, and functions of the interface board and the control board are integrated on the one board. In this case, the central processing unit on the interface board and the central processing unit on the control board may be combined into one central processing unit on the board, to perform functions of the two after combination. The device in this form (for example, a network device such as a low-end switch or router) has a relatively weak data exchange and processing capability. A specific architecture to be used depends on a specific networking deployment scenario.

In some possible embodiments, each of the foregoing network devices may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has functions of a complete hardware system and that runs in an entirely isolated environment. The virtual machine may be configured as each network device in FIG. 1 or FIG. 2. For example, each network device may be implemented based on a general-purpose physical server with reference to a network functions virtualization (Network Functions Virtualization, NFV) technology. Each network device is a virtual host, a virtual router, or a virtual switch. After reading this application, with reference to the NFV technology, a person skilled in the art may virtualize, on the general-purpose physical server, the network devices having the foregoing functions. Details are not described herein again.

It should be understood that the network devices in the foregoing product forms respectively have any functions of the network devices in the foregoing method embodiments, and details are not described herein again.

An embodiment of this application further provides a chip, including a processor and an interface circuit. The interface circuit is configured to receive an instruction and transmit the instruction to the processor. The processor may be, for example, a specific implementation form of the packet processing apparatus in embodiments of this application, and may be configured to perform the packet processing method. The processor is coupled to a memory, the memory is configured to store a program or instructions, and when the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In addition, an embodiment of this application further provides a network system 1000. Refer to FIG. 10. The network system 1000 may include a first network device 1001 and a second network device 1002. The first network device 1001 is configured to perform all operations performed by the first network device in the method 100 shown in FIG. 2. The second network device 1002 is configured to perform all operations performed by the second network device in the method 100 shown in FIG. 2.

It should be noted that, for related description of the network system 1000 shown in FIG. 10, refer to related description of the method 100 corresponding to FIG. 2. Details are not described in this embodiment again.

In addition, an embodiment of this application further provides a computer-readable storage medium. The computer-readable storage medium stores program code or instructions. When the program code or the instructions are run on a computer, the computer is enabled to perform the method in any implementation in the embodiment shown in FIG. 2.

In addition, an embodiment of this application further provides a computer program product. When the computer program product is run on a computer, the computer is enabled to perform the method in any implementation of the method 100.

The "first" in the names such as the "first packet" and the "first network device" mentioned in embodiments of this application is merely used for name identification, and does not mean being the first in order. Such a rule is also applicable to "second" and the like.

It should be understood that "determining B based on A" mentioned in embodiments of this application does not mean that B is determined based only on A, and B may be determined based on A and/or other information.

From the foregoing description of the implementations, a person skilled in the art may clearly understand that some or all steps of the methods in the embodiments may be implemented by software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device such as a router) to perform the methods described in embodiments or some parts of embodiments of this application.

The embodiments in this specification are all described in a progressive manner. For same or similar parts in the embodiments, refer to these embodiments. Each embodiment focuses on a difference from other embodiments. Especially, system embodiments and device embodiments are basically similar to method embodiments, and therefore are described briefly. For related parts, refer to partial description in the method embodiments. The described device and system embodiments are merely examples. The modules described as separate parts may or may not be physically separate, and parts displayed as modules may or may not be physical modules, may be located at one position, or may be distributed on a plurality of network units. Some or all of the modules may be selected based on actual needs to achieve the objectives of the solutions of embodiments. A person of ordinary skill in the art may understand and implement the solutions without creative efforts.

The foregoing merely describes example implementations of this application, and is not intended to limit the protection scope of this application. It should be noted that a person of ordinary skill in the art may make improvements and polishing without departing from this application and such improvements and polishing shall fall within the protection scope of this application.

## Claims

1. A routing method, comprising:
sending, by a first network device, a request message to a second network device when a first condition is met, wherein the request message is used to request a route reaching at least one another network device, and both the first network device and the another network device are connected to the second network device; and
receiving, by the first network device, a route message sent by the second network device in response to the request message, wherein the route message carries the route reaching the at least one another network device.

2. The method according to claim 1, wherein the first network device and the second network device are in a pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device; and the first network device sends the request message to the second network device based on the first condition, and the second network device sends the route reaching the at least one another network device to the first network device in response to the request message.

3. The method according to claim 2, wherein before the pull-mode BGP neighbor relationship is established between the first network device and the second network device, the method further comprises:
sending, by the first network device, a negotiation packet comprising a role identifier to the second network device, wherein the negotiation packet indicates that a role of the first network device in the pull-mode BGP neighbor relationship is a role indicated by the role identifier.

4. The method according to claim 3, wherein a role in the pull-mode BGP neighbor relationship comprises: a pull-mode route receiver, a pull-mode route sender, or a pull-mode route sender and route receiver.

5. The method according to any one of claims 1 to 4, wherein before the first network device sends the request message to the second network device, the first network device stores the first route reaching the second network device, and the first route indicates the first network device to send the traffic destined for the another network device to the second network device.

6. The method according to claim 5, wherein the first route is a default route or an aggregated route.

7. The method according to claim 5 or 6, wherein the method further comprises:
receiving, by the first network device, a first packet, wherein the first packet is a packet destined for a third network device, and the third network device belongs to the at least one another network device;
determining, by the first network device, that the first packet matches the first route; and
sending, by the first network device, the first packet to the second network device based on the first route.

8. The method according to claim 7, wherein the route reaching the at least one another network device comprises a second route reaching the third network device, and after the receiving, by the first network device, a route message sent by the second network device in response to the request message, the method further comprises:
receiving, by the first network device, a second packet, wherein the second packet is a packet destined for the third network device;
determining, by the first network device, that the second packet matches the second route; and
sending, by the first network device, the second packet to the third network device based on the second route.

9. The method according to any one of claims 1 to 8, wherein the first condition comprises at least one of the following conditions:
the first network device determines that a network status of the at least one another network device meets a second condition;
there is an optimization requirement on a service type from the first network device to the at least one another network device; or
the first network device receives an indication message, wherein the indication message indicates the first network device to request the route reaching the at least one another network device.

10. The method according to claim 9, wherein the second condition comprises at least one of the following conditions:
traffic from the first network device to the at least one another network device is greater than or equal to a first threshold; or
a delay from the first network device to the at least one another network device is greater than or equal to a second threshold.

11. The method according to any one of claims 1 to 10, wherein the request message comprises identification information of the at least one another network device, and the identification information comprises a prefix of the at least one another network device, or a number of at least one autonomous system AS through which a path reaching the at least one another network device passes.

12. The method according to any one of claims 1 to 11, wherein the request message is an outbound route filtering ORF request message.

13. The method according to claim 12, wherein the ORF request message comprises a type field, and a value of the type field indicates that the ORF request message comprises an embedded ORF field.

14. A routing method, comprising:
receiving, by a second network device, a request message sent by a first network device, wherein the request message is used to request a route reaching at least one another network device, and both the first network device and the another network device are connected to the second network device; and
sending, by the second network device, a route message to the first network device in response to the request message, wherein the route message carries the route reaching the at least one another network device.

15. The method according to claim 14, wherein the first network device and the second network device are in a pull-mode border gateway protocol BGP neighbor relationship, the first network device is a pull-mode route receiver, the second network device is a pull-mode route sender, the second network device sends a first route reaching the second network device to the first network device, and the first route indicates the first network device to send traffic destined for the another network device to the second network device; and the first network device sends the request message to the second network device based on a first condition, and the second network device sends the route reaching the at least one another network device to the first network device in response to the request message.

16. The method according to claim 15, wherein before the pull-mode BGP neighbor relationship is established between the first network device and the second network device, the method further comprises:
sending, by the second network device, a negotiation packet comprising a role identifier to the first network device, wherein the negotiation packet indicates that a role of the second network device in the pull-mode BGP neighbor relationship is a role indicated by the role identifier.

17. The method according to claim 16, wherein a role in the pull-mode BGP neighbor relationship comprises: a pull-mode route receiver, a pull-mode route sender, or a pull-mode route sender and route receiver.

18. The method according to any one of claims 14 to 17, wherein before the receiving, by a second network device, a request message sent by a first network device, the method further comprises:
sending, by the second network device, the first route reaching the second network device to the first network device, wherein the first route indicates the first network device to send the traffic destined for the another network device to the second network device.

19. The method according to claim 18, wherein the first route is a default route or an aggregated route.

20. The method according to claim 18 or 19, wherein the method further comprises:
receiving, by the second network device, a first packet sent by the first network device, wherein the first packet is a packet destined for a third network device, and the third network device belongs to the at least one another network device; and
sending, by the second network device, the first packet to the third network device.

21. The method according to any one of claims 14 to 20, wherein the request message comprises identification information of the at least one another network device, and the identification information comprises a prefix of the at least one another network device, or the request message comprises a number of at least one autonomous system AS through which a path reaching the at least one another network device passes.

22. The method according to any one of claims 14 to 21, wherein the request message is an outbound route filtering ORF request message.

23. The method according to claim 22, wherein the ORF request message comprises a type field, and a value of the type field indicates that a type of the ORF request message is an embedded ORF request message.

24. The method according to claim 23, wherein the ORF request message comprises an embedded ORF field, and the embedded ORF field carries the identification information of the at least one another network device; and the method further comprises:
if the second network device determines that a first sequence number Sequence in the embedded ORF field does not match any existing sequence number on the second network device, storing, by the second network device, a correspondence between the first sequence number and the identification information of the at least one another network device that is carried in the embedded ORF field.

25. The method according to claim 23, wherein the ORF request message comprises an embedded ORF field, and the embedded ORF field carries the identification information of the at least one another network device; and the method further comprises:
if the second network device determines that a first sequence number Sequence in the embedded ORF field matches an existing second sequence number on the second network device, replacing, by the second network device, content corresponding to the second sequence number with the identification information of the at least one another network device that is carried in the embedded ORF field.

26. The method according to claim 23, wherein the method further comprises:
if the second network device determines that a first sequence number Sequence in an embedded ORF field matches an existing second sequence number on the second network device, and the second network device obtains a delete indication based on the embedded ORF field, deleting, by the second network device, content corresponding to the second sequence number.

27. A network device, wherein the network device comprises a processor and a memory, wherein
the memory is configured to store instructions; and
the processor is configured to execute the instructions in the memory, to enable the network device to perform the method according to any one of claims 1 to 13 or 14 to 26.

28. A network system, wherein the network system comprises a first network device and a second network device, wherein
the first network device is configured to perform the method according to any one of claims 1 to 13; and
the second network device is configured to perform the method according to any one of claims 14 to 26.

29. A computer-readable storage medium, wherein the computer-readable storage medium stores program code or instructions, and when the program code or the instructions are run on a computer, the computer is enabled to perform the method according to any one of claims 1 to 26.
